(19) Europäisches Patentamt

European Patent Office

Office européen des brevets

(11) **EP 1 686 733 A1**

(12) **EUROPEAN PATENT APPLICATION**

(43) Date of publication:
02.08.2006 Bulletin 2006/31

(51) Int Cl.:
*H04L 12/56* (2006.01)  *H04Q 11/00* (2006.01)
*H04B 10/158* (2006.01)  *H04J 14/02* (2006.01)

(21) Application number: 05001567.6

(22) Date of filing: 26.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: SIEMENS AKTIENGESELLSCHAFT
80333 München (DE)

(72) Inventor: De Vega Rodrigo, Miguel
1200 Woluwe St. Lambert Brussels (BE)

(54) **Quality of service concept for OBS networks**

(57) Setting a quality of service for an optical signal transmitted in an optical burst switching network is achieved by setting a quality of service parameter in the packet header representing a level of service of a particular subscriber, and varying the bandwidth reserved of the data burst signal according to the quality of service parameter in the packet header.

## FIG 4

JAT QoS Concept

Burst 1 (high priority) — 402
Reserved Bandwidth — high $p_i$ — 404
406

Burst 2 (low priority) 408
410
low $p_i$ — 412
Reserved Bandwidth — 414

EP 1 686 733 A1

**Description**

Optical burst switching (OBS) has become the method of choice for transporting traffic directly over a buffer-less optical core network. In an OBS network, bursts of data consisting of multiple packets are switched through the network all-optically. OBS has proven to efficiently utilize the bandwidth of such an all-optical network in a cost-effective manner for packet traffic. This is ideal for dense wavelength division multiplexing (DWDM) whose chief advantage is affording carriers higher bandwidth transmission.

The purpose of this invention is to propose a Quality of Service (QoS) scheme for OBS wherein different subscribers are treated differently based on a level of subscription. The idea of QoS is not new, but it is relatively new to OBS. This is partially due to the relatively recent development of transmission protocols for OBS.

In an effort to minimize complexity, however, the existing protocols have inadvertently limited QoS. On the other hand, QoS must be counter-balanced against the need to provide efficient OBS transmission. More specifically, a QoS scheme is needed that provides service differentiation, whilst at the same time does not increase the blocking probability for the OBS network.

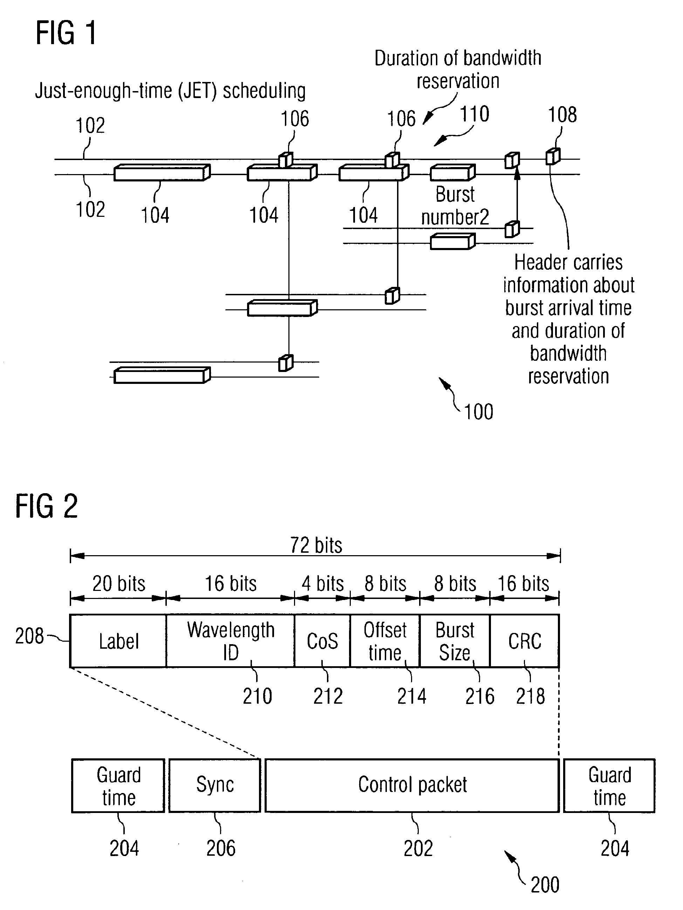

The leading transmission protocol, known as Just Enough Time (JET), is well-accepted as the transmission protocol of choice as it provides a relatively low blocking probability that does not increase complexity of the system. However, as we shall see, JET does not lend itself to service differentiation, the basis of Quality of Service. In order to appreciate just why this is, attention is directed to a brief analysis of JET with reference to Figure 1.

In the JET scheme 100 shown in Figure 1, channels 102 transmit bursts 104 that have corresponding headers 106 identifying a burst start time, i.e., an offset time, and a corresponding burst size. In other words, the burst start time is independent from its header 106. This means that the burst may be transmitted at any time. This approach is known as *reserve fixed duration (RFD),* as the channel is allocated for a fixed duration corresponding to the burst transmission time. Previous protocols only took into account the time of the burst transmission.

JET has proven to lead to higher bandwidth efficiency and is the reason why JET is a favored protocol. This can be seen in the operation of JET as shown in Figure 1 wherein a header, or control packet, 108 arrives at a core cross-connect (or switch). In response thereto, capacity for the bandwidth in the cross-connect for the burst 110 may be administrated. The known control packet structure 200 shown in Figure 2 includes a control packet 202 that is headed by guard time blocks 204 and a sync block 206. The control packet itself 202 is comprised of a label 208, a wavelength ID 210, a class of service (CoS) field 212, an Offset time 214, a burst size field 216 and a cyclic redundancy code (CRC) field 218. In particular, JET uses the burst size field to carry information regarding the burst size.

While JET has proven to efficiently administer bandwidth, it is actually a poor methodology for QoS. As is apparent from Figures 1 and 2, JET makes a bandwidth reservation for the whole burst transmission. In other words, according to plain old JET, JET sends all bursts regardless of priority. This approach obviously does not lend itself to service differentiation because all bursts belong to the same priority class.

However, there arises the problem between QoS and contention handling with JET. Since whole bandwidths are reserved for specific times, when two burst are in contention, JET automatically loses the second in-time burst. In other words, JET's contention policy is that the first in time burst has higher contention than any following bursts. This is problematic for QoS if, for example, the later includes packets that have higher priority than the packets in the first burst. In JET, the second, although higher priority burst, would be lost to the first burst having packets of lower priority.

There have been attempts at providing a class of service using the JET protocol. In Qiao, U.S. Patent Application US2003/0206521, filed May 5, 2003, there is disclosed a method to route and re-reroute data in OBS, Labeled-OBS networks and other burst switched networks. Essentially, what Qiao invents is assembling and arranging an order of packets having different priorities into the same burst as disclosed at paragraphs 20 and 23, et al. But since Qiao is based on JET, his scheme suffers from those problems described above.

There have been discussions on the subject of QoS that suggest inticing solutions that are independent of OBS transmission protocols, such as JET. One such discussion is presented in the article by Y. Arakawa, M. Sakuta, and I. Sasase, entitled "Packet Rearrangement in Optical Composite Burst Switched Network" *Technical Report of* Ieice. According to Arakawa, in burst segmentation, whenever there is contention between two bursts the tail of one of them is blocked. For this reason, packets at the beginning of a burst would seem to have a higher chance of not being blocked than those at the end of a burst. Therefore, it seems reasonable to place high-priority packets at the beginning of the burst and low-priority ones at the end.

However, such discussions have been contentious at best and have not offered a concrete manner in which to provide QoS differentiation to OBS networks. For example, Arakawa also considers placing short packets first for a given QoS class, claiming that this reduces the blocking probability. What Arakawa does not consider is a comparison between the techniques he describes. Nor does he offer any concrete manner in which to implement these ideas.

In any case, there is lacking in the field a QoS methodology for OBS that provides an adequate differentiation of service, yet co-exists with current protocol schemes to provide efficient packet transmission with low blocking probability. In addition, a good QoS approach should be simple and easy to implement. It should not block completely traffic classes with low priority if high priority classes are sending information at full bandwidth. It should be flexible, in the sense that it should be possible to fine tune the QoS parameters such as blocking probability in a certain QoS class. The technical problem is, therefore, to find such QoS concept in OBS networks using the OBS protocols.

SUMMARY

There is provided a method for setting a quality of service for an optical signal transmitted in an optical burst switching network having a data burst signal and a control signal representing the optical signal, wherein the data burst signal is transmitted on the basis of an arrival time of the data burst signal and not on information regarding a burst size of the data burst signal, comprising the steps of:

setting a quality of service parameter in the packet header representing a level of service of a particular subscriber, and varying the bandwidth reserved of the data burst signal according to the quality of service parameter in the packet header.

The invention applies in particular to OBS networks, wherein the data path is decoupled from the control path. In OBS, IP packets are aggregated into much larger bursts before transmission through the network. This allows amortization for the switching overhead across many packets. A control message (or header) is transmitted ahead of the burst in order to configure the switches along the burst's route. The data burst follows the header after some offset time without waiting for an acknowledgment for the connection establishment. An offset time allows for the header to be processed at each node while the burst is buffered electronically at the source.

BRIEF DESCRIPTION OF THE DRAWINGS

The invention shall be described with reference to the following figures in which at least one embodiment is illustrated as an example:

Figure 1 illustrates a state of the art protocol;

Figure 2 illustrates a control packet for the state of the art transmission protocol;

Figure 3 illustrates a control packet for a new protocol; and

Figure 4 illustrates the present invention operation.

DETAILED DESCRIPTION

While the invention is not limited to any particular protocol, the invention works synergistically therewith. In other words, practicing the invention with a particularly advantageous transmission protocol would be recommended. Although, the present invention works well with JET, the invention shall be described with reference to a new protocol, herein referred to as Just the Arrival Time (JAT) protocol, disclosed in a corresponding patent application, filed contemporaneously hereto.

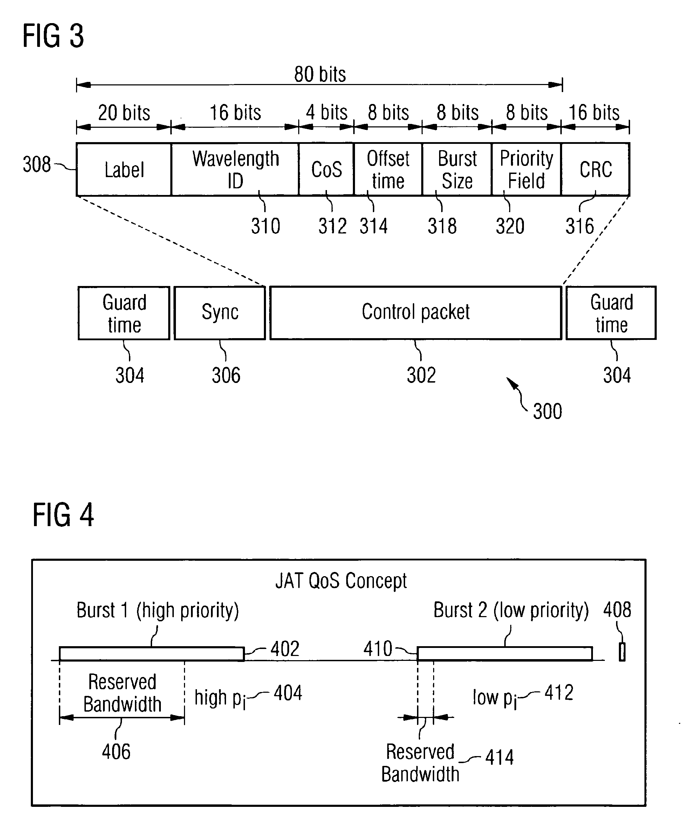

A better appreciation of the new JAT protocol can be seen by observing the control packet structure 300 shown in Figure 3. As will be apparent, for the new JAT reservation protocol, there shall be no burst size information.

As in JET, JAT comprises a control packet 302 bounded by guard blocks 304 and a sync block 306. The *guard time* serves as a way of safely separating consecutive bursts. The sync field allows the receptor to synchronize the reception of the bits belonging to the burst. To continue, the label field 308 identifies the destination edge node. The *wavelength ID* field 310 contains the number of the wavelength on which the burst will be sent. The CoS 312 field stands for class of service and it may contain future QoS relevant information. The *offset time* field 314 contains the value of the offset time between header packet and burst. The CRC 316 field contains a cyclic redundancy code in order for other nodes to detect header packet transmission errors.

As the name indicates, JAT sends just the arrival time. In contradistinction to JET, the JAT header packets have information regarding the arrival time of the burst, such as may be stored in the burst size field 318, but not the burst size. In fact, none of the other reservation protocols, have this unique configuration. That is, only JAT sends the arrival information of the burst but not the duration of the bandwidth reservation, i.e., the burst size. It will be appreciated that the JAT configuration leads to a simpler control plane than with JET since less information has to be processed and less state variables have to be manipulated.

Now turning to the present invention, there is provided a Quality of Servce (QoS) schema for an OBS network.

In its broadest form, the present invention differentiates service by varying the size of the reserved bandwidth in accordance with a QoS parameter indicating a level of service for a particular user.

In one exemplary embodiment, the present invention adds a field to the header 320 messages in order to offer different QoS to different traffic classes. The main QoS parameter, for example, in OBS networks may be based on the blocking probability as it relates most directly to performance parameter. For example, the invention sets the QoS parameter in order to reflect high-priority classes with the lowest blocking probabilities and lower-priority ones with the highest ones. Of course, other QoS settings are within the present invention.

The invention will be better understood with reference to a concrete example using the proposed JAT protocol. Recall from the above that JAT no bandwidth is reserved for the transmission of a burst. In other words, any JAT burst may interrupt the current burst transmission if it arrives before the current burst has been completely sent through the optical switch.

In order to introduce QoS to such a JAT environment, the invention should guarantee that, for high-priority bursts, it is less likely that a lower-priority burst may interrupt their transmission. To achieve this, the idea of this invention is to protect important part of the transmission of a burst. In this example, the higher the priority of the burst, the invention sets the QoS to protect a higher percentage of the burst. Protection is achieved by means of reserving a certain amount of bandwidth for the burst transmission. This amount of bandwidth varies according to the burst priority, and it may be for instance, relatively low, or zero, for the lowest priority class and relatively high, or equal to the burst length, for the highest priority class.

Take, for example, a burst has B bits that is transferred over a wavelength of capacity $C_\lambda$ bits/s. Further assume that it takes $t_{tx}$ seconds of bandwidth in order to transfer this bursts. Naming $p_i$ to the priority of traffic class **i,** we can define $p_i$ as the percentage of the burst transmission time which is protected according to Equation 1:

$$p_i = 100 * \frac{t_i}{t_{tx}}$$

equation

1

,where $t_i$ is the length in seconds of the bandwidth segment which is reserved for the transmission of a burst of priority i and length B. In a JAT type protocol, that is without QoS criteria, it may be said that bursts are transferred with $p_i = 0$. In JET all bursts may be said to have a $p_i = 100$.

In the present invention, the QoS is adjusted by reserving percentages (0-100%) of the available, or pre-reserved, bandwidth. The situation will be better understood with reference to Figure 4.

Since burst 1 402 has a higher percentage of reserved bandwidth ($p_i$) 404 only a small percentage of it (100 - $p_i$) 406 can be interrupted by the transmission of another burst 408. The opposite happens to burst 2 410 that have a lower priority pi 412. These bursts have a smaller reserved bandwidth 414. Therefore, high priority bursts, such as burst 1 402, are not, or not substantially, affected by lower priority bursts, i.e., burst 2 410. On the other hand, lower priority bursts are affected by the protected percentage of higher priority bursts ($p_i$).

Naturally with the present invention, there are no set determinations for which percentage is appropriate for a particular QoS. Rather, fine tuning of the performance characteristics of each QoS class can be done by choosing the right coefficient $p_i$ for each one of them.

The present invention may be practiced and incorporated with other QoS techniques as well. For example, the approach presented by this invention is compatible with the one introduced in Arakawa. In that case, the invention places the most important packets and the shorter ones at the beginning of a burst, so that they are more likely to fall into the reserved bandwidth area.

Nor is the invention limited to JAT, but may be utilized with other protocols such as the JET protocol. Indeed, the JET control packet already includes a field for the burst size. In a JET network this field is filled with the burst transmission time ($t_{tx}$), while in JAT QoS concept it is filled with $p_i*t_{tx}/100$. In JET, we alter the bandwidth reserved according to a QoS level given to the corresponding burst. That is, in some cases the reserved bandwidth is reduced below the size of the burst needed.

However, the JET OBS reservation protocol combined with the QoS scheme of the present invention does not produce as good as a result. JAT QoS is less complex than JET. For one thing, JET would require yet another field in order to carry the priority information, as shown in Figure 5. The corresponding complexity due to the processing of the burst priorities would be magnified.

The advantages of the JAT QoS concept are as follows. firs the present invention, provides a simple, yet low cost solution. It is simpler than the earlier JET QoS concept and it requires less complex Hardware and Software, which leads to a cost reduction. The present invention is more compatibile, as it can be implemented with a standard JET OBS network. Further, the invention can be implemented together with other QoS approaches originally thought for burst segmentation in order to obtain an even better result. The invention is more flexible as it can be implemented as a fair QoS concept. In that case, if bursts with the highest priority have a $p_i < 100$, other lower-priority bursts are not completely blocked and can use part of the bandwidth. In addition, the blocking probability of each traffic class can be fine tuned by choosing the right $p_i$. Moreover, the invention leads to a lower blocking probability for all traffic classes that JET QoS if all $p_i$ are kept small due to the burst segmentation effect.

Although the present invention has been described with reference to specific embodiments, it shall be appreciated that modifications or alterations of the invention are practicable within the spirit and scope of the invention.

**Claims**

1. A method for setting a quality of service for an optical signal transmitted in an optical burst switching network having a data burst signal and a control signal representing the optical signal, comprising the steps of:

   setting a quality of service parameter in the packet header representing a level of service of a particular subscriber, and
   varying the bandwidth reserved of the data burst signal according to the quality of service parameter in the packet header.

2. The method according to any of the preceding claims, further **characterized in that**, allocating a portion of the control signal of the optical burst to carry the quality of service parameter.

3. The method of claim 1, further **characterized in that**, wherein the data burst signal is transmitted on the basis of an arrival time of the data burst signal and not on information regarding a burst size of the data burst signal.

4. The method according to any of the preceding claims, further **characterized in that**, sorting the higher priority packets

5. The method according to any of the preceding claims, further **characterized in that**, at least a bandwidth reserved for a lower quality of service is less than that of a corresponding data burst signal.

6. The method according to any of the preceding claims, further **characterized in that**, truncating only that part of the data burst signal that is outside the reserved bandwidth.

7. The method according to any of the preceding claims, further **characterized in that**, reserving more bandwidth for a quality of service representing higher levels of service than for lower levels of service.

8. The method according to any of the preceding claims, further **characterized in that**, selecting the data bursts corresponding to highest quality of service subscribers for transmission before data bursts of lower quality of service subscribers

9. The method according to any of the preceding claims, further **characterized in that**, selecting the data bursts corresponding to shorter data bursts for transmission before data bursts of longer data bursts

10. The method according to any of the preceding claims, further **characterized in that**, places the most important packets and the shorter ones at the beginning of a burst, so that they are more likely to fall into the reserved bandwidth area.

11. The method according to any of the preceding claims, further **characterized in that**, collecting packets of different quality of service in different data burst signals.

12. The method according to any of the preceding claims, further **characterized in that**, transmitting the optical burst according to the jet protocol.

13. The method according to any of the preceding claims, further **characterized in that**, transmitting the optical burst according to the jat protocol.

14. The method according to any of the preceding claims, further **characterized in that**, transmitting the optical burst according to the jit protocol.

**15.** The method according to any of the preceding claims, further **characterized in that**, transmitting the optical burst according to the horizon protocol.

# FIG 1

Just-enough-time (JET) scheduling

Duration of bandwidth reservation

Header carries information about burst arrival time and duration of bandwidth reservation

Burst number2

# FIG 2

72 bits

| 20 bits | 16 bits | 4 bits | 8 bits | 8 bits | 16 bits |
|---------|---------|--------|--------|--------|---------|
| Label | Wavelength ID | CoS | Offset time | Burst Size | CRC |
| 208 | 210 | 212 | 214 | 216 | 218 |

| Guard time | Sync | Control packet | Guard time |
|------------|------|----------------|------------|
| 204 | 206 | 202 | 204 |

## FIG 3

80 bits

| 20 bits | 16 bits | 4 bits | 8 bits | 8 bits | 8 bits | 16 bits |
|---------|---------|--------|--------|--------|--------|---------|

308

| Label | Wavelength ID | CoS | Offset time | Burst Size | Priority Field | CRC |
|-------|---------------|-----|-------------|------------|----------------|-----|

310  312  314  318  320  316

| Guard time | Sync | Control packet | Guard time |
|------------|------|----------------|------------|

304  306  302  304

300

## FIG 4

JAT QoS Concept

Burst 1 (high priority)    Burst 2 (low priority)  408

402    410

Reserved Bandwidth    high p_i ⌐404    low p_i ⌐412

406    Reserved Bandwidth ⌐414

**European Patent Office**

**EUROPEAN SEARCH REPORT**

Application Number

EP 05 00 1567

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | US 2003/099243 A1 (OH SE-YOON ET AL) 29 May 2003 (2003-05-29)<br><br>* abstract; figures 5,6 *<br>* paragraph [0008] - paragraph [0009] *<br>* paragraph [0012] - paragraph [0015] *<br>* paragraph [0026] *<br>* paragraph [0051] - paragraph [0054] *<br>----- | 1<br><br>2-15 | H04L12/56<br>H04Q11/00<br>H04B10/158<br>H04J14/02 |
| A | US 2002/109878 A1 (QIAO CHUNMING) 15 August 2002 (2002-08-15)<br>* paragraph [0012] *<br>* paragraph [0027] - paragraph [0028] *<br>----- | 1-15 | |
| A | WO 01/84875 A (NOKIA, INC) 8 November 2001 (2001-11-08)<br>* page 4, line 11 - page 7, line 4 *<br>----- | 1-15 | |
| A | LIU D Q ET AL: "Differentiated services and scheduling scheme in optical burst-switched WDM networks" NETWORKS, 2002. ICON 2002. 10TH IEEE INTERNATIONAL CONFERENCE ON AUG 27-30, 2002, PISCATAWAY, NJ, USA,IEEE, 27 August 2002 (2002-08-27), pages 23-27, XP010603592 ISBN: 0-7803-7533-5<br>* paragraph [2.DIFFERENTIATED.SERVICES] *<br>* paragraph [3.OPTICAL.BURST.SWITCHING.MECHANISM] *<br>----- | 1-15 | TECHNICAL FIELDS SEARCHED (Int.Cl.7)<br><br>H04L<br>H04Q<br>H04B<br>H04J |

The present search report has been drawn up for all claims

| Place of search | Date of completion of the search | Examiner |
|---|---|---|
| Munich | 18 April 2005 | Lefebvre, L |

## ANNEX TO THE EUROPEAN SEARCH REPORT
## ON EUROPEAN PATENT APPLICATION NO.

EP 05 00 1567

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2005

| Patent document cited in search report | | Publication date | Patent family member(s) | | Publication date |
|---|---|---|---|---|---|
| US 2003099243 | A1 | 29-05-2003 | KR 2003043206 | A | 02-06-2003 |
| US 2002109878 | A1 | 15-08-2002 | WO 02067505 | A1 | 29-08-2002 |
| WO 0184875 | A | 08-11-2001 | AU 5731601 | A | 12-11-2001 |
| | | | EP 1224833 | A2 | 24-07-2002 |
| | | | WO 0184875 | A2 | 08-11-2001 |

EPO FORM P0459

For more details about this annex : see Official Journal of the European Patent Office, No. 12/82